# EUROPEAN PATENT APPLICATION

(11) **EP 1 369 176 A1**
(43) Date of publication of application: **10.12.2003**
(21) Application number: 02012172.9
(22) Date of filing: 03.06.2002
(51) Int. Cl.: B01J 23/63, C01B 3/40, B01J 37/02

(54) **Method for preparing a catalyst for the catalytic production of hydrogen, a process for the catalytic generation of hydrogen and a method for operating a fuel cell system**

(71) Applicant: PAUL SCHERRER INSTITUT, 5232 Villingen PSI (CH)
(72) Inventor: Newson, Esmond, Dr., 8200 Schaffhausen (CH); Truong, Thanh-Binh, 5033 Buchs (CH)
(74) Representative: Fischer, Michael, Dr.

(57) **Abstract**

A process for catalytically generating hydrogen and a process for operating a fuel cell system is disclosed. The catalyst is prepared by the following process steps:
a) forming an impregnated support material by impregnating a metal oxide or a mixture of metal oxides with a soluble rare earth metal compound or with a soluble mixture of rare earth metal compounds;
b) drying the impregnated support material; and
c) forming the catalyst by dispersing a precious metal or a mixture of precious metals on the impregnated support material.
The impregnated support material did not show in XRD analyses any peak for the rare earth metal compound.

## Description

The invention relates to a method for preparing a catalyst for the catalytic production of hydrogen. Further, the invention relates to a process for the catalytic generation of hydrogen and a method for operating a fuel cell system.

Hydrogen is currently used mainly in industry, in activities such as the manufacture of fertilizers, petroleum processing, methanol synthesis, annealing of metals and producing electronic materials. In the foreseeable future, the emergence of fuel cell technology will extend the use of hydrogen to domestic and vehicle applications.

With respect to vehicle applications the proton exchange membrane (PEM) fuel cell vehicle is expected to be the most promising one for private and public transportation. The first automobile manufacturers have successfully launched prototype vehicles comprising PEM fuel cell stacks not larger than a conventional combustion engine. These stacks offer a permanent power of about 40 to 50 kWe while operating with pure hydrogen. Advanced experiences from powering submarines with PEM fuel cells show for the PEM fuel cell system technology a rapid development whereby the choice of fuel for a passenger vehicle did not so far keep pace.

Generally, three possible fuel options are discussed. They are hydrogen, methanol and gasoline whereby for both the latter, - high temperature fuel processors are required onboard instead of appropriate means for the storage of -pure hydrogen. -This is still a task to be generally resolved -for the storage of liquid hydrogen, which is connected with the technical challenge of the logistics and -cryogenics.

Currently, fuel processing technologies tend to generate hydrogen instantly onboard based either on steam-reforming or on partial oxidation. Each approach has its merits. While partial oxidation is a fast exothermic process resulting in rapid start-up and short response times, steam reforming is endothermic and very efficient, producing hydrogen from both the fuel and the steam.

As shown in the prior art an ideal fuel processor is likely a combination of partial oxidation and steam reforming (see EP 0 217 532, EP 0 262 947). These documents show that the two reactions can be carried out simultaneously in a catalyst that has been described according to the European patent application EP 0 495 534 as comprising a ceria stabilized zirconia carrier promoted with Rhodium and/or Ruthenium thereon. This catalyst led to a considerable yield of hydrogen avoiding instantly the generation of -significant carbon monoxide amounts which would otherwise jeopardize the reliability and life time of the catalyst.

The international patent application WO 99/48805 presents a process for the catalytic generation of hydrogen by the self-sustaining combination of partial oxidation and steam reforming of a hydrocarbons, such as straight or branch chain hydrocarbons having 1 to 15 carbon atoms and include methane, propane, butane, hexane, heptane, normal-octane, iso-octane, naphthas, liquefied petroleum gas and reformulated gasoline petrol and diesel fuels. It is already from the aforementioned documents well-known to contact a mixture of the hydrocarbon, an oxygen-containing gas and steam with the catalyst comprising dispersed rhodium on a refractory oxide support material which is a mixture of ceria and zirconia. It is outlined as essentially that the catalyst is manufactured from physically mixed ceria and zirconia to form the support material. According to example 1 of this document the conversion rate for methane is 98.5% at an gas hourly space velocity (GHSV) close to 20,000 per hour -which led with the other data given in example 1 to an H₂ Yield of 22.4 % and a CH₄ selectivity of 22.8 %. Therefore, the space time yield, that means the hydrogen production rate (l/h * 1 reactor volume), lies in the range of 1,900 per hour which delivers a thermal power of about 4.75 kW per litre of reactor volume. Taking into consideration the elevated temperature of 555°C, too, it can be easily derived therefrom that this power density will hardly match the ideas of those who intend to bring a PEM fuel cell vehicle to the market.

For these reasons, it is the aim of the invention to offer a process for preparing a catalyst that shows a significantly higher selectivity for hydrocarbons, i.e. CH₄, that results in increased values for the achievable power density. It is further an object of the invention to provide a process for catalytically generating hydrogen and a process for operating a fuel cell system taking advantage on this improved power density.

According to the invention this aim with respect to the process for preparing a catalyst is reached by the following process steps:
a)forming an impregnated support material by impregnating a metal oxide or a mixture of metal oxides with a soluble rare earth metal compound or with a soluble mixture of rare earth metal compounds;
b)drying the impregnated support material; and
c)forming the catalyst by dispersing a precious metal or a mixture of precious metals on the impregnated support material.

The achievable results have indicated much higher CH₄ selectivity when impregnating the metal oxide with a soluble rare earth metal compound and afterwards dispersing the promoter metal. Due to the improved nano-distribution (the impregnated support material did not show in XRD analyses any peak for the rare earth metal compound) the catalytic activity of the catalyst has been increased significantly. The amount of the rare earth metal compound necessary can be instantly decreased vastly as compared with the catalyst according to example 1 of the WO 99/48805.

It could be found that excellent results are achieved when the metal oxide is zirconia. Alternatively, possible materials as refractory support material can be at least one of the group titania, - - silica and hafnia.

With respect to a suitable rare earth metal compound excellent hydrogen conversion rates result from using a cerium-salt as a rare earth compound. As a compound capable to be prepared for the impregnation process step, there may be employed, for example, cerium hydroxide, a cerium halide, a cerium oxyhalide, cerium nitrate, cerium carbonite, cerium acetate, cerium oxalate, a cerium alkoxide such as cerium methoxide, cerium ethoxide, cerium propoxide, cerium isopropoxide or cerium butoxide, or the like. Among these compounds, the cerium alkoxide may be preferably employed.

Beside using a cerium compound, also a compound or a mixture of compounds from at least one rare earth metal selected from the group containing Praseodym, Neodym and Gadolinium.

For achieving an excellent micro-distribution of the precious metal the dispersion of the precious metal or the mixture of precious metals can be reached by impregnating the impregnated support material with a soluble precious metal compound or with a soluble mixture of precious metal compounds.

Two of the most preferred precious metals -are rhodium or ruthenium. As a raw material of rhodium, there may be mentioned, for example, a rhodium halide such as rhodium chloride or the like; a halogenated rhodinate such as sodium chlororhodinate, ammoniumchlororhodinate or the like; a halogenated rhodinic acid such as chlororhodinic acid or the like; a rhodiumhydroxide such as rhodium (III) hydroxide, rhodium (IV) hydroxide or the like; rhodium nitrate; rhodium oxide; or an organic rhodium compound such as rhodium carbonyl or the like. The raw material of ruthenium, there may be mentioned, for example, a ruthenium halide such as ruthenium iodide, ruthenium chloride or the like; a halogenated ruthenate such as ammonium chlororuthenate or the like; a halogenated ruthenic acid such as chloro-ruthenic acid or the like; a ruthenate such as potassium ruthenate or the like; or an organic ruthenium compound such as ruthenium carbonyl or the like. Among these raw materials for the precious metal ingredients of the catalyst, ruthenium - nitrosyl nitrate is preferably employed.

Furthermore, these raw materials for the precious metal ingredient of the catalyst may be employed singly or in combination of two or more.

In order to gain a long term stabile refractory support material an amount of rare earth metal compound from 0.1 to 30, preferably 0.5 to -15 weight per cent of the total weight of the catalyst is highly recommended. This composition lead to significant lower amounts of the rare earth metal compound as compared to the catalyst disclosed in the prior art, i.e. in the WO 99/048805 (mentioned before) that discloses a physical mixture of equally zirconia and ceria as starting ingredients.

In order to support the catalytic activity in a sufficient manner and owing to the impregnation process step, the amount of precious metal is 0.01 to 10, preferably 0.05 to 2 weight per cent of the total weight of the catalyst which is advantageous with respect to the manufacturing costs, too.

According to the invention a process for the catalytic generation of hydrogen by a combination of partial oxidation and steam reformation of a hydrocarbon is provided that comprises:
a) vaporizing the hydrocarbon;
b) forming a gas mixture by adding steam and oxygen or an oxygen-containing gas to the vaporized hydrocarbon;
c) contacting said gas mixture with a catalyst manufactured according the method given in any one of the claims 1 to 11 under the condition of elevated temperature and pressure as compared with standard condition (20°C, 1 bar).

As being observed during the test series performed under this above-mentioned conditions the temperatures for gaining an satisfying amount of hydrogen from both gaseous (C₁ to C₃) and liquid (C₄ to C₁₀) hydrocarbons in the catalytic reactor are significantly lower as compared with conventional endothermic natural gas and naphtha based hydrogen plants.

Suitable raw materials for this process are hydrocarbons in form of a straight chain or branch chain hydrocarbon containing 1 to 10 carbon atoms; the hydrocarbon contains 1 to 10 carbon atoms derived from the classification paraffins, olefins, naphtenes and aromatics (PONA) and isomers therein. As examples there may be mentioned that the hydrocarbon is selected from methane, ethane, propane, butane, pentane, hexane, heptane, octane and their isomers, natural gas, naphthas, liquefied petroleum gas, isomerates, platformates and other blending components of the gasoline pool giving research octane numbers (RON = 85 to 100).

With respect to the content of oxygen in the gas mixture it is preferred to use air or enriched air as the oxygen containing gas such that the content of oxygen is greater than 20 %vol. and less than 80 %vol.

Other preferred process conditions are:
a) the steam to carbon ratio is between 1 to 10, preferably 2 to 5; and/or
b) the ratio of oxygen to hydrocarbon in the feed and the oxygen required by stoichiometry is between 0.5 to 1; and/or
c) the ratio of steam to hydrocarbon in the feed and the steam required by stoichiometry is between 1 to 10, preferably 2 to 5; and/or
d) the temperature is between 200 and 700°C, preferably between 450 and 600°C; and/or
e) the pressure is between 1 to 20 bar, preferably between 1.5 to 8 bar; and/or
f) the gas hourly space velocity is between 20000 to 200,000 per hour.

With respect to the method for operating a fuel cell system the solution according to the invention comprises a process for the catalytic generation of hydrogen being performed under the conditions as described above.

In order to decrease the complexity of the fuel cell system it is foreseen that after vaporizing a gasoline the catalytic generation of hydrogen takes place at temperatures lower than 700°C followed by a preferential oxidation process (PROX). In this embodiment downstream the vaporizer the catalyst is placed performing as a POX-Burner. It is the benefit of the inventions that the use of a high temperature shift reactor and a low temperature shift reactor downstream of the POX-burner can be abandoned.

Additional advantageous variations of the inventions may be derived from the other dependent claims.

The present invention is further described by way of the following illustrative examples with respect to the preparation of the POX catalyst and the micro reactor data.

### Example 1: Methane partial oxidation with Rh and Ru catalyst

### 1.1 Catalyst preparation

A batch of catalyst with a nominal composition of 1%Rh/5%CeO/ZrO₂ and 10%Ru/10%CeO/ZrO₂ (based on the proportion of the precursors) was prepared by first impregnating the crushed zirconia support material with an aqueous Ce-salt solution to form a slurry. This slurry has been dried by the rotavap method at temperature of 85°C and calcining the product in an airflow oven to provide a cerium impregnated support (CeO/ZrO₂) .

In detail, the Cerium doped support has been prepared as follows: 1 gram of crushed zirconia support, granules of 0.125-0.25 mm particle diameter, was impregnated with stirring with 4.0 ml of cerium (IV) ammonium nitrate (12.78 mg Ce/ml). The resulting slurry was transferred to a rotavap apparatus and dried at 85°C and 100 mbar pressure.Drying was completed in a drying oven at 125°C for 3 hours under 100 mbar pressure.Calcination with an airflow of 100 ml/minute at 500°C for three hours completed the preparation of the cerium doped support (5%Ce/ ZrO₂).

It should be pointed out at this occasion that the support material may be in all other reasonable form suitable for fixed bed reactor applications, such as spheres, extrudates, cylinders, tablets, rings and half-rings. It could be alternatively also in the form of monoliths or other structured support packings, such as ceramic honeycomb bodies, stacks of juxtaposed metallic plate-type catalysts having the catalytic material coated on the surfaces of the metallic plates, for fixed bed applications.

Secondly, this Cerium-impregnated zirconia support material was impregnated with an aqueous Rh-salt solution and an aqueous Ru-salt solution resp. to form a slurry followed by drying the slurry by the rotavap method and afterwards calcining the product in an airflow oven to give the nominal compositions 1%Rh/5%CeO/ZrO₂ (hereinafter referred to as PSI Cat. Rh) and 10%Ru/10%CeO/ZrO₂ (hereinafter referred to as PSI Cat. Ru).

In detail, the POX Catalyst then has been prepared as follows: 5.1 ml rhodium nitrate (10 mg Rh/ml) was added to 5 grams of doped support with stirring for three hours. The slurry was transferred to a rotavap apparatus and dried at 85°C and 100 mbar pressure. Drying was completed in a drying oven overnight at 120°C. Calcination with an airflow of 100 ml/min. at 550°C for three hours completed the preparation of the POX catalyst with a nominal composition of 1%Rh/5%Ce/ZrO₂.

### 1.2 Microreactor Data

A small bed of granulated catalyst (0.1 g) in the size range of (0.125 to 0.250 mm), nominal composition 1%Rh/5%CeO/ZrO₂, was placed in a glass lined steel reactor and positioned at the center of an electrically heated oven. At a pressure of 4 bar absolute, the catalyst was activated by degassing in flowing nitrogen at 300°C, followed by a catalyst reduction with hydrogen at 80 ml/minute at 550°C. The stoichiometry for the partial oxidation/steam reforming process of methane to hydrogen is

CH₄ + 0.5 O₂ + H₂O = CO₂ + 3 H₂. (1)

A gas mixture of methane (6.0 standard ml/min), nitrogen (25 standard ml/min), oxygen (3.0 standard ml/min) and steam (18.8 standard ml/min) was passed through the catalyst bed at an oven temperature of 550°C. At this temperature, 68.5% of the methane was converted to reformate containing 24.4% H₂/9.3% CO₂/1.4% CO/64.7 N₂ (plus water and unreacted methane). The catalyst was 720 hours onstream at various temperatures (450 to 550°C) and conditions, indicating significant stability.

In comparison with the prior art catalyst according to WO 99/48805, page 8, example 1 (hereinafter referred to as "JM Cat. Ex 1") containing of the same nominal composition the experimental data is listed below in table 1:

**Table 1:**

| **Experimental data of Example 1** | | | |
|---|---|---|---|
| | **PSI Cat. Rh** | **PSI Cat. Ru** | **JM Cat. Ex 1** |
| Temp. °C | 550 | 550 | 555 |
| Pressure bar | 4 | 4 | appr. 2 |
| GHSV h⁻¹ | 45,312 | 44,928 | 19,620 |
| Inlet CH₄ % | 11.3 | 13.7 | 14.5 |
| λH₂O/λ_{O2} | 3.1/1 | 3.4/1.1 | 3.2/1.1 |
| CH₄ Conv., % | 68.5 | 66.6 | 98.5 |
| H₂ Yield, % | 52.5 | 51.1 | 22.4 |
| CH₄ Select., % | 76.6 | 76.6 | 22.8 |
| STY, 1 H₂/h/lrv | 8,102 | 6,626 | 1,915 |
| GHSV: gas hourly space velocity, litres feed gas/hour/litre reactor volume (Irv) λ: molar ratio of species into the reactor/ species from equation given above Conversion * selectivity = Yield STY: space time yield, hydrogen production rate in litres H₂/h/lrv | | | |

The advantage of the cerium impregnation of the PSI Cat. Rh and the PSI Cat. Ru over the catalyst made from a physical mixture of supports CeO and ZrO₂ (JM Cat. Ex.1) can be seen from the higher H₂ production (STY) at higher flow rates (GHSV) due to the higher selectivity 76.6 versus 22.8.

### Example 2: Partial oxidation of isooctane, platformer feeds

Comparison catalysts were prepared by two methods:
2.1 The first batch for this example has been prepared with the Cerium impregnation according to Example 1, 1.1, giving a nominal composition of 1%Rh/5%CeO/ZrO₂.
2.2 The second batch for this example started with a physical mixture of CeO and ZrO₂ in the same proportions as under 2.1 followed by Rh impregnation to give a nominal composition of 1%Rh/5%CeO/ZrO₂, i.e. following the procedure of Example 1 in the WO 99/48805.

In a microreactor as in Example 1, 1.2, two representative liquid feeds (isooctane und refinery platformater feed with research octane number, RON = 75) were used to compare the activity of the catalyst preparation 2.1 and 2.2 at the same experimental conditions for partial oxidation (POX) to produce hydrogen. The stoichiometry for the partial oxidation of isooctane is

C₈H₁₈ + 2 O₂ + 12 H₂O = 8 CO₂ + 21 H₂ (2)

and the experimental data is given in Table 2 below:

**Table 2:**

| **Experimental Data of Example 2, Isooctane feed** | | | | |
|---|---|---|---|---|
| **Isooctane Feed** | **Cat. 2.1** | **Cat. 2.1** | **Cat. 2.2** | **Cat. 2.2** |
| Temp., °C | 450 | 475 | 450 | 475 |
| Pressure, bar | 5 | 5 | 5 | 5 |
| WHSV, h⁻¹ | 8 | 8 | 8 | 8 |
| %H₂ (dry) | 14.0 | 17.0 | 7.4 | 13.1 |
| Hotspot, °C | 45 | 45 | 35 | 34 |
| STY, 1 H₂/h/Irv | 5312 | 6849 | 2447 | 4807 |
| WHSV: isooctane feed rate in grams/hour/gram of catalyst STY: hydrogen production rate in litres H₂/h/lrv | | | | |

Once again, the advantage of the cerium impregnation (Cat. 2.1 and Cat. 2.2) over the physical mixture of supports Ceria and zirconia is seen from the higher H₂ production (STY), at higher flow rates (GHSV) due to the higher selectivity. This higher activity is caused by the nano-distribution of the cerium on the zirconia support. In comparing the different catalysts, the catalyst prepared under impregnation with the aqueous cerium-salt solution does not show any peaks for ceria in an XRD analyses implying that both the ceria and the precious metal content are dispersed that far that grains over 50 Angström have not been built and as a consequence peaks for ceria and the precious metal could not be observed.

Table 3 below shows the corresponding data for the refinery platformer feed (RON =75). The amount of sulphur contained in the feed was lower than 1 ppm.

**Table 3:**

| **Experimental data for Example 2, Refinery platformer feed RON 75** | | | | |
|---|---|---|---|---|
| **Refinery platformer feed RON 75** | **Cat. 2.1** | **Cat. 2.1** | **Cat. 2.2** | **Cat. 2.2** |
| Temp., °C | 450 | 475 | 450 | 475 |
| Pressure, bar | 5 | 5 | 5 | 5 |
| WHSV, h⁻¹ | 8 | 8 | 8 | 8 |
| %H₂ (dry) | 10.9 | 19.5 | 6.2 | 10.0 |
| Hotspot, °C | 36 | 22 | 34 | 29 |
| STY, 1 H₂/h/Irv | 4,235 | 8,261 | 2,043 | 3,578 |

With respect to the results from this example, too, the catalyst having impregnated cerium dispersed thereon shows superior behaviour over the catalyst starting with physically mixed ceria and zirconia.

### Example 3: Partial Oxidation of isooctane

And last but not least, in a direct comparison of the partial oxidation of isooctane according to equation (2), the catalyst of this invention, Example 1, 1.1, was compared to the catalyst according to the prior art document WO 99/48805, Example 7, page 11, last paragraph to page 12, first paragraph (hereinafter referred to as "JM Example 7"), at the same experimental conditions using 0.2 g catalyst in both cases. The results are given in Table 4 below:

**Table 4:**

| **Experimental data of Example 3, isooctane feed** | | |
|---|---|---|
| **Isooctane feed** | **PSI Cat.Rh** | **JM Example 7** |
| Catalyst wt., g | 0.2 | 0.2 |
| Temp., °C | 550 | 550 |
| Press., bar | 2 | 2 |
| WHSV, h⁻¹ | 14.7 | 14 |
| Liquid i-C₈, cm³/h | 4.2 | 4 |
| Water, cm³/h | 4.1 | 4 |
| Air, cm³/min | 105 | 175 |
| Conversion, % | 64 | 100 |
| Hotspot, °C | 80 | not known |
| % H₂ (dry) | 36.8 | 33 |
| % CO₂ (dry) | 17.0 | 15 |
| % CO (dry) | 6.0 | 5 |
| % CH₄ (dry) | 2.1 | not known |
| STY, 1 H₂/h/lrv | 28,005 | 15,153 (?) |

The example repeats showing that with the same quantity of catalyst and the same feed inlet conditions, more hydrogen was produced by PSI Cat.Rh, made by cerium impregnation of the support at a lower conversion than by the prior art catalyst JM Example 7, made by the physical mixture of the oxides of cerium and zirconium.

As pointed out by the interpretation of the results from the different examples the nano-distribution of the cerium compound on the zirconia lead to the significant increase of the catalytic activity of the catalyst. As far as results for comparising catalyst containing other rare earth metal compounds than cerium compounds does not exist in the prior art it should be pointed out that this nano-distribution of a rare earth metal compound not only serves as a stabilizing compound for the metal oxide support compound by contributes in a non-neglectible manner already to the catalytic activity of the catalyst. Further, it has to be pointed out that the use of other precious metal compounds such as platinum, iridium but also compounds from tungsten, molybdenum can be considered in a reasonable manner.

## Claims

1. A method for preparing a catalyst for the catalytic production of hydrogen, comprising:
a) forming an impregnated support material by impregnating a metal oxide or a mixture of metal oxides with a soluble rare earth metal compound or with a soluble mixture of rare earth metal compounds;
b) drying the impregnated support material; and
c) forming the catalyst by dispersing a precious metal or a mixture of precious metals on the impregnated support material.

2. The method according to claim 1,
**characterized in that**
the metal oxide is zirconia.

3. The method according to claim 1 or 2,
**characterized in that**
the metal oxide is titania.

4. The method according to any one of the preceeding claims,
**characterized in that**
the metal oxid is alumina or silica.

5. The method according to any one of the preceeding claims,
**characterized in that**
the rare earth metal compound is a Cerium-salt.

6. The method according to any one of the preceeding claims,
**characterized in that**
the rare earth metal compound is a Gadolinium-salt.

7. The method according to any one of the preceeding claims,
**characterized in that**
the dispersion of the precious metal or the mixture of precious metals is achieved by impregnating the impregnated support material with a soluble precious metal compound or with a soluble mixture of precious metal compounds.

8. The method according to any one of the preceeding claims,
**characterized in that**
the precious metal is Rhodium.

9. The method according to any one of the preceeding claims,
**characterized in that**
the precious metal is Ruthenium.

10. The method according to any one of the preceeding claims,
**characterized in that**
the amount of rare earth metal compound is 0.1 to 30, preferably 0.5 to 15 weight per cent of the total weight of the catalyst.

11. The method according to any one of the preceeding claims,
**characterized in that**
the amount of precious metal is 0.01 to 10, preferably 0.05 to 2 weight per cent of the total weight of the catalyst.

12. The method according to any one of the preceding claims,
**characterized in that**
the support material is in the form suitable for fixed bed reactor applications, such as granules, spheres, extrudates, cylinders, tablets, rings and half-rings.

13. The method according to any one of the preceding claims except claim 12,
**characterized in that**,
the support is in the form of monoliths or other structured support packings, such as ceramic honeycomb bodies, stacks of juxtaposed metallic plate-type catalysts having the catalytic material coated on the surfaces of the metallic plates, for fixed bed applications.

14. A process for the catalytic generation of hydrogen by a combination of partial oxidation and steam reformation of a hydrocarbon comprising:
b) vaporizing the hydrocarbon;
c) forming a gas mixture by adding steam and/or oxygen or an oxygen-containing gas to the vaporized hydrocarbon;
d) contacting said gas mixture with a catalyst manufactured according the method given in any one of the claims 1 to 6 under the condition of elevated temperature and pressure as compared with standard condition (20°C, 1 bar).

15. The process according to claim 14,
**characterized in that**
the hydrocarbon is a straight chain or branch chain hydrocarbon containing 1 to 10 carbon atoms.

16. The process according to claim 14,
**characterized in that**
the hydrocarbon contains 1 to 10 carbon atoms derived from the classification paraffines, olefins, naphtenes and aromatics (PONA) and isomers therein.

17. The process according to any one of the preceeding claims, **characterized in that**
the hydrocarbon is selected from methan, ethane, propan, butane, pentane, hexane, heptane, octane and their isomers, natural gas, naphthas, liquefied petroleum gas, isomerates, platformates and other blending components of the gasoline pool giving research octane numbers (RON = 85 to 100).

18. The process according to any one of the preceeding claims, **characterized in that**
the oxygen containing gas is air or enriched air such that the content of oxygen is greater than 20 %vol. and less than 80 %vol.

19. The process according to any one of the preceeding claims, **characterized in that**
the steam to carbon ratio is between 1 to 10, preferably 2 to 5.

20. The process according to any one of the preceeding claims, **characterized in that**
the ratio of oxygen to hydrocarbon in the feed and the oxygen required by stoichiometry is between 0.5 to 1.

21. The process according to any one of the preceeding claims, **characterized in that**
the ratio of steam to hydrocarbon in the feed and the steam required by stoichiometry is between 1 to 10, preferably 2 to 5.

22. The process according to any one of the preceeding claims, **characterized in that**
the temperature is between 200 and 700°C, preferably between 450 and 600°C.

23. The process according to any one of the preceeding claims, **characterized in that**
the pressure is between 1 to 20 bar, preferably between 1.5 to 8 bar.

24. The process according to any one of the preceeding claims, **characterized in that**
the gas hourly space velocity is between 20000 to 200,000 per hour.

25. A method for operating a fuel cell system comprising a process for the catalytic generation of hydrogen according to any one of the claims 12 to 22.

26. The method according to claim 23,
**characterized in that**
after vaporizing a gasoline the catalytic generation of hydrogen takes place at temperatures lower than 700°C followed by a preferential oxidating process (PROX).
